# EUROPEAN PATENT APPLICATION

(11) **EP 4 387 183 A1**
(43) Date of publication of application: **19.06.2024**
(21) Application number: 23215665.3
(22) Date of filing: 11.12.2023
(51) Int. Cl.: H04L 41/0806, H04L 41/083, H04L 41/0895, H04L 41/40, H04L 41/5054, H04L 67/1012

(54) **SOFTWARE DEFINED NETWORK CONTROLLER, NETWORK DEVICE, METHOD AND APPARATUS OF DETERMINING RESOURCES**

(30) Priority: 12.12.2022 CN 202211600253
(71) Applicant: Nokia Solutions and Networks Oy, 02610 Espoo (FI)
(72) Inventor: WEN, Hai Bo, Shanghai, 200125 (CN); ZHANG, Kai Bin, Shanghai, 201204 (CN)
(74) Representative: DREISS Patentanwälte PartG mbB

(57) **Abstract**

Example embodiments of the present disclosure provide devices, methods, apparatuses, and a computer-readable storage medium for computing and network convergence. In an example method embodiment, the SDN controller receives a first message from a first network device controlled by SDN, where the first message includes type information indicating that a type of the first message is a resource report type and resource information of a computing node associated with the first network device; and determines, based at least on the first message, resources of a SDN domain in which the SDN controller is located. As such, the SDN controller also can manage and control the resources of the SDN domain in addition to controlling the SDN network. Therefore, the SDN controller can perform a resource allocation according to the resources of the SDN domain, to optimize the computing power resources of the SDN domain, boost the resource utilization rate of the SDN domain, and further enhance the processing efficiency of the packets.

## Description

### FIELD

Embodiments of the present disclosure generally relate to the field of computer networks, and more specifically, to devices, methods, apparatuses and a computer-readable storage medium for computing and network convergence.

### BACKGROUND

In traditional networks, connections are first established followed by computing deployment. Network and computing are treated separately, and there is no inter-perception between computing power resources and network. This may lead to lower utilization in some parts of the network and unbalanced utilization between different computing nodes.

With advance of the related work, the concept of computing network, e.g., from Computing Power Network (CPN) or Computing Force Network (CFN) to Computing and Network Convergence (CNC), is gradually proposed. The existing computing and network convergence has been widely recognized. As to CFN, for example, the CFN router may compute the optimal computing service node on the basis of the distribution of the computing power resources or services of the computing node, establish an Internet Protocol (IP) tunnel between an ingress CFN router and an egress CFN router and deliver data via the IP tunnel. However, since the IP tunnel uses an IP-in-IP mode, the packet head is increased, which for example may lead to fewer data in the load and further reduce the data delivery efficiency.

### SUMMARY

In general, example embodiments of the present disclosure provide a solution for computing and software defined network convergence.

In a first aspect, there is provided a SOFTWARE DEFINED Network (SDN) controller. The SDN controller comprises: at least one processor; and at least one memory storing computer instructions, the instructions, when executed by the at least one processor, causing the SDN controller to: receive a first message from a first network device controlled by SDN, wherein the first message includes type information indicating that a type of the first message is a resource report type and resource information of a computing node associated with the first network device; and determine, based at least on the first message, resources of a SDN domain in which the SDN controller is located.

In a second aspect, there is provided a network device controlled by SDN. The network device controlled by SDN comprises: at least one processor; and at least one memory storing computer instructions, the instructions, when executed by the at least one processor, causing the network device to: receive a resource report message from an associated computing node, wherein the resource report message includes resource information of the computing node; generate a first message based on the resource report message, wherein the first message includes type information indicating that a type of the first message is a resource report type and the resource information; and transmit the first message to an SDN controller.

In a third aspect, there is provided a method, comprising: receiving a first message from a first network device controlled by SDN, wherein the first message includes type information indicating that a type of the first message is a resource report type and resource information of a computing node associated with the first network device; and determining, based at least on the first message, resources of a SDN domain in which the SDN controller is located.

In a fourth aspect, there is provided a method, comprising: receiving a resource report message from an associated computing node, wherein the resource report message includes resource information of the computing node; generating a first message based on the resource report message, wherein the first message includes type information indicating that a type of the first message is a resource report type and the resource information; and transmitting the first message to an SDN controller.

In a fifth aspect, there is provided an apparatus, comprising: means for receiving a first message from a first network device controlled by SDN, wherein the first message includes type information indicating that a type of the first message is a resource report type and resource information of a computing node associated with the first network device; and means for determining, based at least on the first message, resources of a SDN domain in which the SDN controller is located.

In a sixth aspect, there is provided an apparatus, comprising: means for receiving a resource report message from an associated computing node, wherein the resource report message includes resource information of the computing node; means for generating a first message based on the resource report message, wherein the first message includes type information indicating that a type of the first message is a resource report type and the resource information; and means for transmitting the first message to an SDN controller.

In a seventh aspect, there is provided a non-transitory computer-readable medium, storing computer programs thereon, the computer programs, when executed by at least one processor of a device, cause the device to perform the method according to the third or fourth aspect.

In an eighth aspect, there is provided a computer program product, storing computer programs thereon, the computer programs, when executed by at least one processor of a device, cause the device to perform the method according to the third or fourth aspect.

With reference to the drawings, other features and advantages of the embodiments of the present disclosure also become obvious in the following description of particular embodiments. Principles of the embodiments of the present disclosure are illustrated by examples in the drawings.

### BRIEF DESCRIPTION OF THE DRAWINGS

With reference to the drawings and the following detailed description, the above and other features, advantages and aspects of various embodiments of the present disclosure become more obvious. In the drawings, same or similar reference signs indicate same or similar elements, wherein:
Fig. 1 illustrates a schematic diagram of a structure of the CFN routing domain;
Fig. 2 illustrates a structural diagram of a computing and SDN convergence in which some example embodiments of the present disclosure may be implemented;
Fig. 3 illustrates a schematic flowchart of a procedure for resource registration in computing and software defined network convergence in accordance with some example embodiments of the present disclosure;
Fig. 4 illustrates a schematic flowchart of a procedure for service provisioning in a network of computing and software defined network convergence in accordance with some example embodiments of the present disclosure;
Fig. 5 illustrates a schematic flowchart of signaling between the SDN controller and the network device in a network of computing and software defined network convergence in accordance with some example embodiments of the present disclosure;
Fig. 6 illustrates a schematic diagram of packet delivery in a network of computing and software defined network convergence in accordance with some embodiments of the present disclosure;
Fig. 7 illustrates a flowchart of an example method implemented at the software defined network controller in accordance with some example embodiments of the present disclosure; and
Fig. 8 illustrates a flowchart of an example method implemented at the network device controlled by a software defined network in accordance with some example embodiments of the present disclosure.

### DETAILED DESCRIPTION

Principles of the present disclosure are now described with reference to some example embodiments. It is to be understood that the embodiments are depicted merely for explanatory purpose, to help those skilled in the art understand and implement the present disclosure, rather than suggesting any restrictions over the scope of the present disclosure. The present disclosure may be implemented in various ways besides the illustrated ones below.

In the following description and claims, all technical and scientific terms used herein have the meaning commonly recognized by those ordinary in the art unless defined otherwise.

In the present disclosure, the terms "one embodiment", "an embodiment" and "example embodiment" indicate that the described embodiment may include particular features, structures or characteristics, but not every embodiment necessarily comprises such features, structures or characteristics. Besides, the above terms may not refer to the same embodiment. When a particular feature, structure, or characteristic is described in connection with example embodiments, it is claimed that it is well within the knowledge of those skilled in the art that such feature, structure, or characteristic will be influenced if reference is drawn from other embodiments, whether or not explicitly described.

It should be appreciated that although respective elements may be described using the terms of "first", "second" and the like, these elements should not be restricted to these terms. Instead, the terms are provided only for differentiating functions of the elements. As used herein, the term "and/or" includes any and all combinations of one or more listed terms.

The terms used here are provided only to describe a particular embodiment, rather than limiting the example embodiment. As used herein, "one" and "this" in singular form is also intended to include the plural cases unless clearly indicated otherwise in the context. It is also understood that the terms "comprise", "have" and/or "contain" used herein indicate the presence of the stated features, elements and/or components etc., and may also include one or more other features, elements and components and/or combinations thereof.

As used herein, the term "circuit" represents one or more of:
(a) implementations of hardware circuit only (e.g., implementations of analog and/or digital circuit alone); and
(b) combinations of hardware circuit and software, for example (if applicable):
   (i) combinations of analog and/or digital hardware circuit(s) and software/firmware, and
   (ii) any part(s) of hardware processor(s) having software (including digital signal processor(s), software and memory(memories) operating in combination to enable apparatuses like mobile phone or server to implement various functions); and
(c) hardware circuit(s) and/or processor(s) requiring software (such as firmware) for operation, for example microprocessor(s) or a part thereof, but being free of software when there is no operation for it.

The definition of circuit is applicable to all scenarios whenever it is used in the present application (including any claims). As a further example, the term "circuit" as used herein also encompasses implementations of hardware circuit or processor (or a plurality of processors) alone or part of hardware circuit or processor and (their) attached software and/or firmware. The term "circuit", if applicable to specific claim elements, also include, for example, baseband integrated circuit or processor integrated circuit for mobile devices, or similar integrated circuits within servers, cellular network devices or other computing or network devices.

As used herein, the term "network device" refers to a device having forwarding and routing functions in the computer network, and for example may include, but not limited to, transponder, router, switch, hub and gateway device etc.

The term "terminal device" refers to any terminal devices capable of wireless communications. As an example rather than a limitation, the terminal device also may be known as communication device, User Equipment (UE), Subscriber Station (SS), portable subscriber station, Mobile Station (MS) or Access Terminal (AT). The terminal device may include, but not limited to, cellular phone, smartphone, Voice over IP (VoIP) phone, wireless local loop phone, tablet computer, wearable terminal device, Personal Digital Assistant (PDA), portable computer, desktop computer, image capture terminal device such as digital camera, gaming terminal device, music storage and play device, on-board wireless terminal device, wireless endpoint, mobile station, Laptop Embedded Equipment (LEE), Laptop Mounting Equipment (LME), USB dongle, intelligent device, wireless Customer Premises Equipment (CPE), Internet of Things (IoT) devices, watches or other wearable devices, Helmet-Mounted Displays (HMD), vehicles, drones, medical equipment and applications (such as remote operation), industrial devices and application (e.g., robots and/or other wireless devices operating in industrial and/or automatic processing chain environments), consumer electronic devices, and devices operating over business and/or industrial wireless networks etc. The terminal device also may correspond to Mobile Terminal (MT) part of Integrated Access Backhaul (IAB) nodes (also known as relay nodes). In the following description, the terms "terminal device", "communication device", "terminal", "user equipment" and "UE" may be used interchangeably.

In the text, the computing network may be implemented through Computing and Network Convergence (CNC) and the computing network may also be known as computing aware network, computing convergence network, and network compute fabric etc. The network is intended to optimize resource allocation. The vision may include: making computing power as a service, and merging it into the network; and making computing power and network inter-perceivable by each other. Thus, the distributed computing power resources are optimally scheduled via the network to provide ubiquitous computing for the requests from third parties and end-users.

Since 2019, the concept of Computing Power Network (CPN) or Computing Force Network (CFN) has been proposed which will make the convergence of computing and networking, i.e., Computing and Network Convergence (CNC). The current Computing and Network Convergence has been widely recognized.

The main international standardization organizations have started the related works. There are some working items in ITU Telecommunication Standardization Sector (ITU-T) for different aspects of computing power/force network; in 2021, ITU-T releases its first recommendation on this topic, i.e., Recommendation ITU-T Y2501 ("Computing power network - Framework and architecture"). In Internet Engineering Task Force (IETF), some contributions on computing power routing have been proposed (e.g., "framework of compute first networking", "architecture of dynamic-anycast in compute first networking"). Broadband Forum also has study item, i.e., SD-466 ("metro computing network").

The operators of China (i.e., China Telecom, China Unicom, China Mobile) have shown great enthusiasm on this direction and also made CNC as their strategy direction, they have published related whitepapers and put great efforts on it. For example, China Mobile Communications Cooperation (CMCC) has initiated a Birds of a Feather (BoF) at IETF 113 on Computing Aware Network (CAN) in March 2022, and it will request next BoF in IETF 114 /IETF 115, trying to push to form a working group on this topic. In addition, China Communications Standards Association (CCSA) has also worked on a serial work-items for CNC.

Some Study Item Descriptions (SID) on Computing and Network Convergence have also been proposed in the 3rd Generation Partnerships Project (3GPP), e.g., S2-2107562 "new SID on study on integration of network and computing power in 5GS" in 2021, and S1-221076 "New SID on supporting computing aware network".

Moreover, Ericsson has proposed the concept of Network Compute Fabric, which is created by two major trends coming together - faster, more reliable connectivity and widespread availability of cloud services driven by virtualization. Network Compute Fabric evolves beyond edge computing to fuse connectivity and computing capabilities and create a unified entity for both.

In fact, Computing and Network Convergence is one of the characteristics of the next generation network. For example, the industry has taken computing force network or related concept as one of important feature in 6G. Next G Alliance of Automatic Terminal Information Service (ATIS) also says "6G represents a new paradigm in communications because of advances in communications and sensing, convergence of communications and compute..." and "the 6G distributed cloud and communications system is expected to fundamentally expand mobile system capabilities and services from being communication-centric to becoming communication-computing-data centric. A tighter integration between communication and computing is expected to achieve a wide-area distributed cloud across mobile device compute, network compute, and data centers."

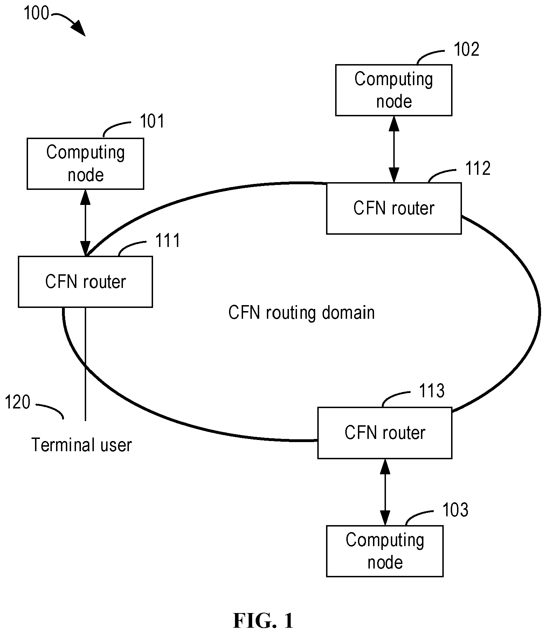

In a short, computing and network convergence has gotten more and more investigation. Fig. 1 illustrates a schematic diagram of data routing 100 in the CFN routing domain. Computing node (C-node) may report its resource and services to an adjacent CFN router. With reference to Fig. 1, the computing node 101 may report to the CFN router 111 and the computing node 102 may report to the CFN router 112, while the computing node 103 may report to the CFN router 113. Moreover, the respective CFN routers may broadcast resources and services received from linked computing nodes to the rest CFN routers, e.g., transmitted through an IP routing protocol.

When there are data to be transmitted, the CFN router 111 may receive data from the user 120 as an ingress CFN router and afterwards may determine the optimal computing node, e.g., computing node 102. As such, IP tunnel is used between ingress CFN router 111 and egress CNF router 112 for the data delivery between the user 120 and the optimal computing node 102. The IP tunnel between ingress CFN router 111 and egress CNF router 112 may include multi-hop, i.e., the rest one or more CFN routers not shown in Fig. 1 may also be included. As the IP protocol encapsulates packets by adding packet heads, a loading portion of the packet transmitted via the IP tunnel is relatively small, leading to an excessively low transmission efficiency of packets.

To address the above and other potential problems, embodiments of the present disclosure provide a technical solution for computing and network convergence, which establishes Computing and SDN Convergence (CSDNC) through Software Defined Network (SDN). The IP routing protocol is not needed in the SDN domain. Accordingly, by converging the computing domain and the SDN domain, data delivered in the computing and network convergence may be increased to further boost the delivery efficiency. As a result, the CSDNC proposed by embodiments of the present disclosure can bring greater benefits to the operators.

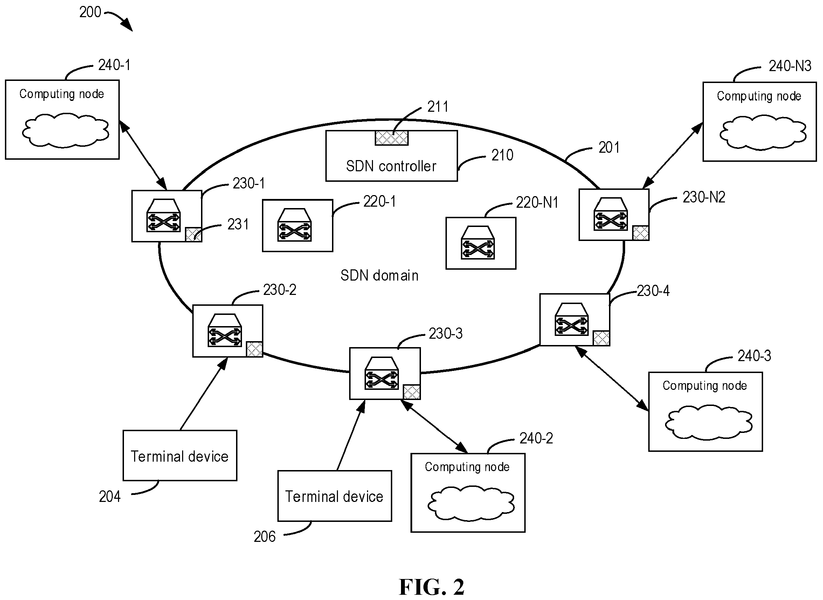

Fig. 2 illustrates a structural diagram of a computing and SDN convergence 200 in which some example embodiments of the present disclosure may be implemented. Fig. 2 shows an SDN domain 201, including an SDN controller 210, one or more intermediate network devices 220-1 to 220-N1 (respectively or collectively known as a network device 220) and one or more edge network devices 230-1 to 230-N2 (respectively or collectively known as a network device 230). One or more computing nodes 240-1 to 240-N3 (respectively or collectively known as a computing node 240) may be separately linked to respective nearest edge network devices.

The SDN is a network that separates network control plane from user data plane. It may decouple the network control and forwarding functions, enable the network control to become directly programmable and abstract the underlying infrastructure for applications and network services. The OpenFlow (OF) protocol is one of the main protocols for building SDN. The widely applied SDN technology may reduce tunnels, such as IP-in-IP and the like, and improve the transmission efficiency by configuring end-to-end forwarding paths.

In embodiments of the present disclosure, the network device 220/230 may be a network device under control of the SDN controller 210. In some examples, the network device 220/230 for example may be a switch, e.g., an OF-switch. Therefore, the network device in embodiments of the present disclosure may be implemented as a Layer 2 switch, rather than a Layer 3 router. This may avoid building of the IP tunnels and excessively small load of the forwarded packets.

In embodiments of the present disclosure, the computing control plane protocol may be defined and the computing control plane is introduced into SDN. As an example, the SDN controller 210 may include a CNC module 211, and the edge network device 230 may include a CNC proxy 231. Alternatively, the intermediate network device 220 also may include a CNC proxy, or the intermediate network device 220 may be implemented as a switch in the existing SDN, i.e., the CNC proxy may not be provided.

As an example, the CNC module may be added into the SDN controller 210, and the CNC proxy may be added into the ingress network device 230, which may be implemented by software, or optionally by firmware, hardware or combinations of firmware/hardware with software.

As an example, the computing control plane may be defined in the SDN domain 201, which may include the computing node 240, the CNC proxy 231 in the edge network device 230, and the CNC module 211 in the SDN controller 210.

With reference to Fig. 2, any computing node 240 has an associated edge network device 230, e.g., the nearest edge network device 230. For example, the computing node 240-1 is connected to the network device 230-1 and the computing node 240-3 is connected to the network device 230-4 etc. As an example, the edge network device 230 also may communicate with a terminal device. For instance, in Fig. 2, the edge network device 230-2 may communicate with the terminal device 204, and the edge network device 230-3 may communicate with the terminal device 206.

It is to be understood that N1, N2, and N3 are all positive integers. The number of network devices and the number of computing nodes shown in Fig. 2 are only exemplary. In practical scenarios, more or fewer network devices and computing nodes may be included.

Functions of respective entities are to be described in details below with reference to further embodiments.

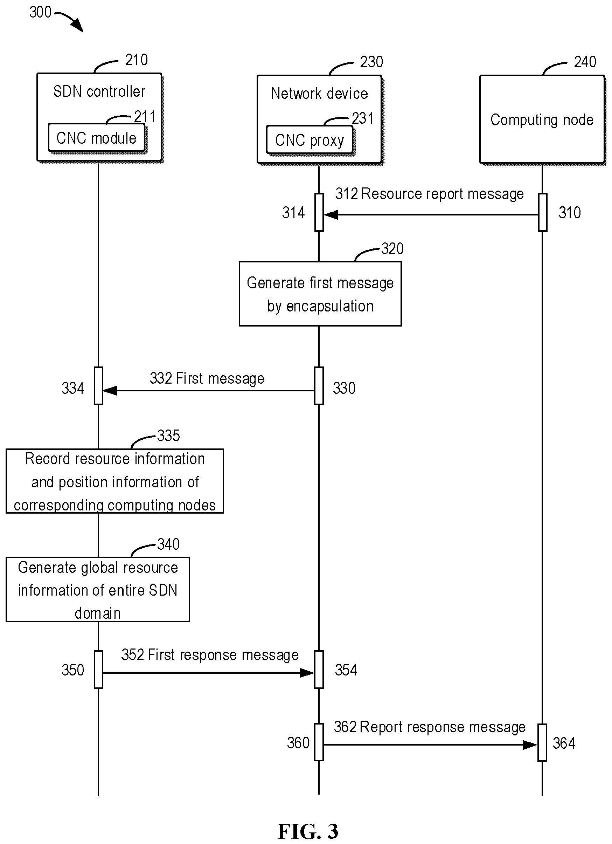

Fig. 3 illustrates a schematic flowchart of a procedure 300 for resource registration in the CSDNC network in accordance with some example embodiments of the present disclosure. For ease of description, the procedure 300 in Fig. 3 is depicted with reference to Fig. 2, where the procedure 300 involves the SDN controller 210, the edge network device 230, and the computing node 240. Besides, the SDN controller 210 includes the CNC module 211, and the edge network device 230 includes the CNC proxy 231.

The computing node 240 transmits (310) a resource report message 312 to the network device 230. Specifically, the computing node 240 may transmit the resource report message 312 to an associated (connected) network device 230. With reference to Fig. 2, the computing nodes 240-1, 240-2, 240-3, and 240-N3 each transmit their respective resource report messages to the corresponding network devices 230-1, 230-3, 230-4, and 230-N2. As an example, the edge network device 230 in Fig. 3 may be an ingress network device, such as an ingress OF switch.

In some embodiments, the resource report message 312 may include the resource information of the computing node 240. As an example, the resource information of the computing node 240 may include computing power information of the computing node 240 and/or the service information implemented on the computing node. For instance, the computing power information may indicate the computing power provided by the computing node 240, such as information regarding memory and processor, including various computing power resources like storage space size and processor speed. For example, the service information may indicate the service to be implemented on the computing node 240, e.g., a service type to be implemented. The computing node 240 may report the available resources thereon through the resource report message 312.

Correspondingly, the network device 230 receives (314) the resource report message 312. Specifically, the resource report message 312 may be received by the CNC proxy 231 of the network device 230. As an example, the network device 230 may parse the resource report message 312 to obtain the resource information of the computing node 240.

The network device 230 generates (320) the first message by encapsulation. Further, the network device 230 may encapsulate the resource information of the computing node 240 into the first message, where the first message may optionally include type information to indicate that the type of the first message is a resource report type.

Alternatively, the first message 332 may further include other information, such as physical port information, logic port information, or the like. The present disclosure is not restricted this aspect. Subsequently, the network device 230 transmits (330) the first message 332 to the SDN controller 210. Correspondingly, the SDN controller 210 receives (334) the first message 332.

In embodiments of the present disclosure, the computing control plane may be defined based on an extended OF protocol. As an example, a message from the network device 230 to the SDN controller 210 may be a Packet-In message of the extended OF protocol. The Packet-In message may be ofp_packet_in, which for example has the following structure in Table 1:

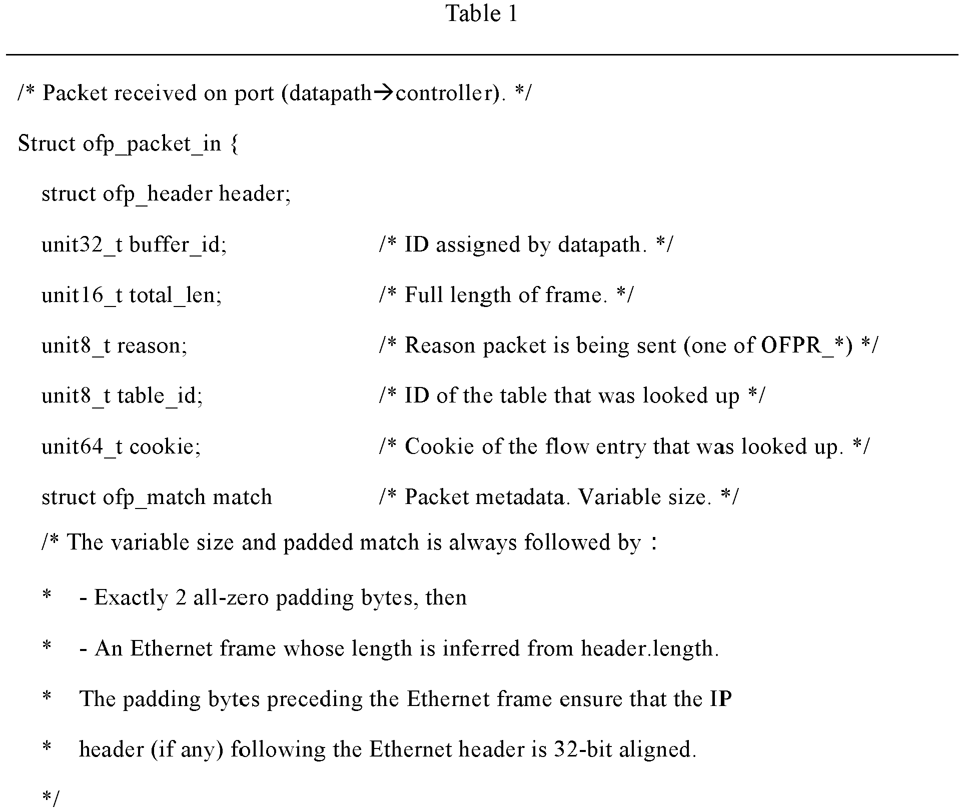

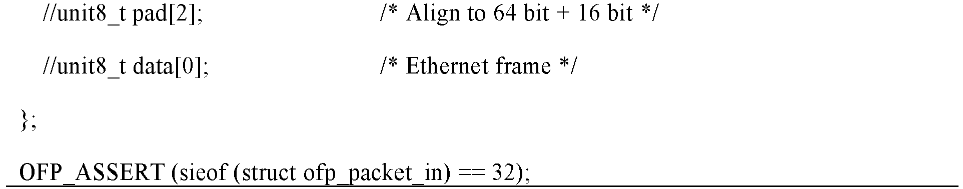

In some embodiments, the CNC proxy 231 of the network 230 may encapsulate the resource information in a data field of match (i.e., ofp_match). Alternatively, port information may also be carried in a context field of match, where the port information for example indicates which port receives the first message 332. It is to be appreciated that the port information may facilitate the SDN controller 210 to determine from which network device 230 the first message 332 comes.

In some embodiments, the CNC proxy 231 of the network device 230 may encapsulate the type information in a reason field. In embodiments of the present disclosure, new message types, such as a resource report type and a service request type, may be defined.

As an example, on the basis that reasons of the packets are sent to the controller in the existing OF protocol, two new reasons indicating the resource report type and the service request type respectively, may be additionally defined. For instance, the reason field may be illustrated as Table 2 below:

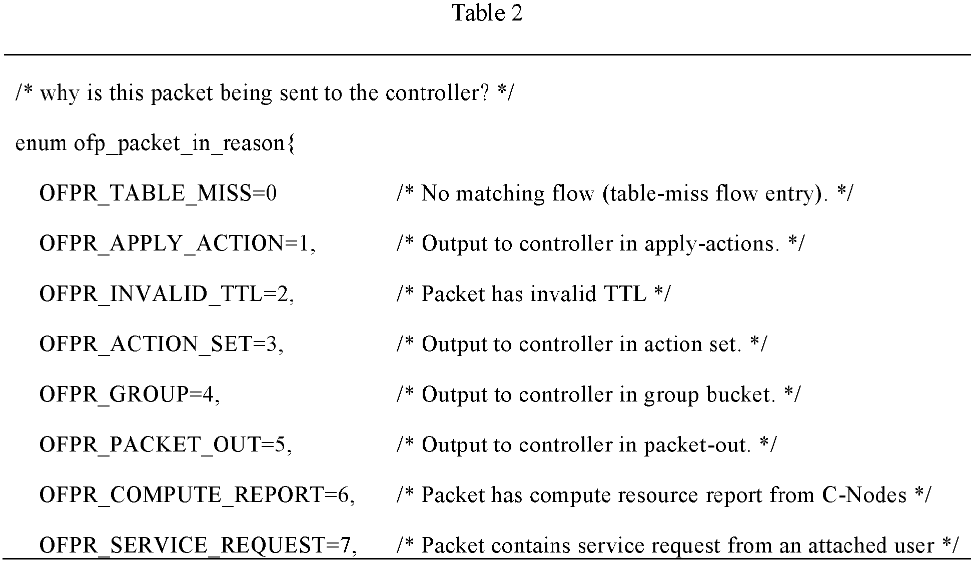

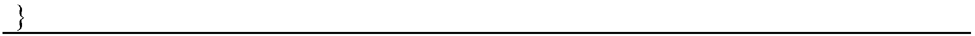

With reference to Table 2, the newly defined reason OFPR_COMPUTE_REPORT=6 may refer to the resource report type, and the newly defined reason OFPR_SERVICE_REQUEST=7 may refer to the service request type.

In this way, by incorporating the type information into the first message, the type information may be explicitly delivered to the SDN controller 210, to further facilitate the SDN controller 210 to more rapidly determine the message type. Moreover, on the basis of the message type, the SDN controller 210 may invoke or call the CNC module 211 to perform subsequent acts.

Continuing to refer to Fig. 3, the SDN controller 210 records (335), based on the first message 332, the resource information and the position information of the corresponding computing nodes. Specifically, the SDN controller 210 may receive first messages from a plurality of network devices 230 to further obtain the resource information of the plurality of computing nodes 240. In addition, the CNC module 211 of the SDN controller 210 can generate (340) global resource information of the entire SDN domain based on the resource information of the plurality of computing nodes 240.

As an example, the global resource information of the entire SDN domain may indicate resources of the SDN domain, wherein the resources of the SDN domain may include computing power resources and/or service resources of the SDN domain. In some examples, the resources of the SDN domain may include the resource information of each of the plurality of the computing nodes 240.

In some embodiments, the SDN controller 210 may store and maintain the resources of the SDN domain. For example, the resources of the SDN domain may be stored in the form of resource distribution map or sheet.

The SDN controller 210 transmits (350) a first response message 352 to the network device 230. As an example, the first response message 352 may indicate an acknowledgement of the first message. For example, the first response message may include a resource report acknowledgement (Ack).

Alternatively, the first response message may further include other information, e.g., in-port information, action length information, or the like. The present disclosure is not restricted this aspect. In embodiments of the present disclosure, the computing control plane may be defined based on the extended OF protocol. For example, the message from the SDN controller 210 to the network device 230 may be a Packet-Out message of the extended OF protocol. The Packet-Out message may be ofp_packet_out, which for example may have the structure in Table 3 below:

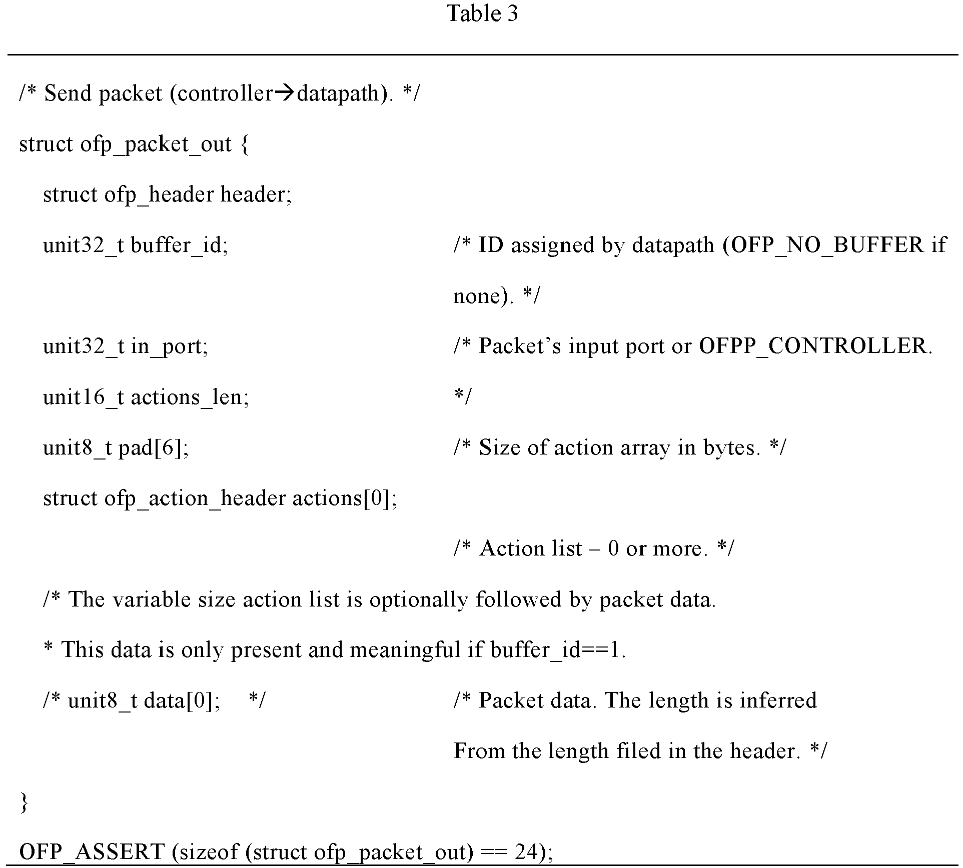

In some embodiments, the SDN controller 210 may set the in-port (in_port) field as the controller, and configure the actions field as Ack for the resource report and the output port information (i.e., the port to which the first response message should be sent such as the computing node 240).

Correspondingly, the network device 230 receives (354) the first response message 352. The network device 230 may determine that the first response message 352 includes the resource report Ack by de-capsulation. Alternatively, the network device 230 also may determine that the output port information indicates the computing node 240 by de-capsulation.

Moreover, the computing device 230 transmits (360) a report response message 362 to the computing node 240. As an example, the report response message 362 includes the resource report Ack. Correspondingly, the computing node 240 receives (364) the report response message 362.

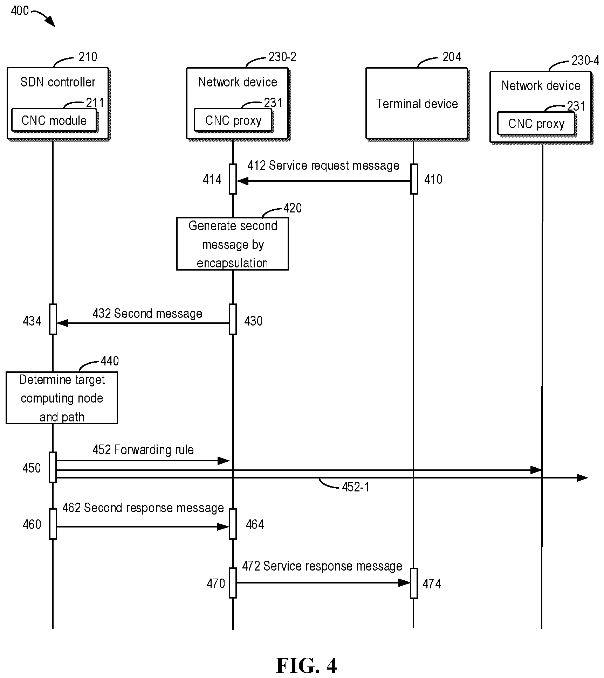

Fig. 4 illustrates a schematic flowchart of a procedure 400 for service provisioning in a network of computing and software defined network convergence in accordance with some example embodiments of the present disclosure. For ease of description, the procedure 400 in Fig. 4 is depicted with reference to Fig. 2. The procedure 400 may be a procedure of service provisioning. As an example, it is assumed that a service request is present at the terminal device 204 as illustrated, and the procedure 400 involves the SDN controller 210, the edge network device 230-2, the terminal device 204, and the edge network device 230-4, where the SDN controller 210 includes the CNC module 211, and the edge network devices 230-2 and 230-4 each includes the CNC proxy 231.

The terminal device 204 transmits (410) a service request message 412 to the network device 230-2. As an example, in case there is a packet to be transmitted at the terminal device 204, a service request message 412 may be sent to a connected edge network device 230-2. The service request message 412 may include description information of the service and related requirement information. For example, it may include the service request information required by the packet to be transmitted, such as CPU resource, end-to-end delay, and quality of service (QoS) parameters etc.

The network device 230-2 receives (414) the service request message 412. Specifically, the service request message 412 may be received by the CNC proxy 231 of the network device 230-2. As an example, the network device 230-2 may parse the service request message 412 to obtain the service request information of the terminal device 412.

The network device 230-2 generates (420) a second message by encapsulation. Furthermore, the network device 230-2 may encapsulate the service request information in the second message. The second message also may optionally include type information, which indicates that the type of the second message is a service request type.

Alternatively, the second message 432 may further include other information, such as physical port information, logic port information, or the like. The present disclosure is not restricted this aspect. Subsequently, the network device 230-2 transmits (430) the second message 432 to the SDN controller 210. Correspondingly, the SDN controller 210 receives (434) the second message 432.

In embodiments of the present disclosure, the second message 432 may be implemented as the Packet-In message of the extended OF protocol having the structure shown in the above Table 1 for instance. Optionally, the reason field may be set to be "OFPR_SERVICE_REQUEST" to indicate the service request type, as shown in Table 2.

In this way, by incorporating the type information into the second message, the type information may be explicitly delivered to the SDN controller 210, to further facilitate the SDN controller 210 to more rapidly determine the message type. Moreover, on the basis of the message type, the SDN controller 210 may invoke or call the CNC module 211 to perform subsequent acts.

Continuing to refer to Fig. 4, the SDN controller 210 determines (440), based on the second message 432, the target computing node and the path information, where the path information indicates a path from the network device 230-2 to a network device associated with the target computing node. For example, the path information may indicate a plurality of network devices, which at least includes the network device 230-2 and the network device associated with the target computing node.

Specifically, the SDN controller 210 may determine the target computing node based on the resources of the SDN domain. As an example, with reference to Fig. 2, it is assumed that the determined target computing node is the computing node 240-3. In addition, the edge network device connected to the target computing node 240-3 is the network device 230-4 as shown in Fig. 2.

Alternatively, if the target computing node has not been deployed, the SDN controller 210 may allocate the required computing power resources on the target computing node, and instantiate the desired service module on the allocated computing power resources for processing needed by the service request. As such, the target computing node can make computing and service preparations for the service request through the instantiation operations.

The SDN controller 210 also may determine the path, e.g., based on topology information of the SDN domain, where the path indicates the network device 230-2 and the network device 230-4. Optionally, the path also may indicate one or more other network devices between the network device 230-2 and the network device 230-4. For example, the one or more other network devices include one or more intermediate network devices/edge network devices. As an example, with reference to Fig. 2, it may assume that the network devices indicated by the path include the network device 230-2, the network device 220-1, the network device 220-N1, and the network device 230-4.

The SDN controller 210 transmits (450) a forwarding rule 452 to respective network devices associated with the path information. Correspondingly, each network device on the path may respectively receive the corresponding forwarding rule. Specifically, the SDN controller 210 transmits to the respective network devices the forwarding rules 452 associated with the network devices. For instance, the forwarding rule 452 may indicate to the network device: the port from which the packet comes, the port from which the packet is delivered and a bandwidth for delivering the packet. The SDN controller 210 can configure an end-to-end path from the network device 230-2 to the network device 230-4 by transmitting the forwarding rule 452.

It is to be noted that although Fig. 4 illustrates a procedure of transmitting the forwarding rules 452 by the SDN controller 210 via a single step, it does not mean that the forwarding rules sent to different network devices from the SDN controller 210 in the present disclosure are the same. For instance, the forwarding rule sent to the network device 230-2 by the SDN controller 210 may indicate one or more of the following: for a packet from a first port, forwarding the packet by a second port, a first bandwidth required by the first port; or a second bandwidth required by the second port, where the first port and the second port are two different ports of the network device 230-2. For example, the forwarding rule sent to the network device 230-4 by the SDN controller 210 may indicate one or more of the following: for a packet from a third port, forwarding the packet by a fourth port, a third bandwidth required by the third port; or a fourth bandwidth required by the fourth port, where the third port and the fourth port are two different ports of the network device 230-4. Assuming that the path includes the intermediate network device 220-1, the forwarding rule sent to the network device 220-1 (denoted by an arrow 452-1 in Fig. 4) may indicate a forwarding rule associated with the ports on the network device 220-1, which will not be elaborated here.

The SDN controller 210 transmits (460) a second response message 462 to the network device 230-2. As an example, the second response message 462 may indicate an acknowledgement of the second message. For example, the second response message may include a service request acknowledgement (Ack). For instance, the second response message 462 may indicate the target computing node (such as the computing node 240-3), for example, the second response message 462 may include an index or identifier of the target computing node.

Alternatively, the second response message 462 may further include other information, e.g., in-port information, action length information, or the like. The present disclosure is not restricted this aspect. In embodiments of the present disclosure, the second response message 462 may be implemented as a Packet-Out message of the extended OF protocol. The Packet-Out message may be ofp_packet_out, which for example may have the structure in the Table 3 above.

In some embodiments, the SDN controller 210 may set the in-port (in_port) field as the controller, and configure the actions field as Ack for the service request and the output port information (i.e., the port to which the second response message 462 should be sent such as the terminal device 204).

Correspondingly, the network device 230-2 receives (464) the second response message 462. The network device 230-2 may determine that the second response message 462 includes the service request Ack and an indication of the target computing node by de-capsulation. Alternatively, the network device 230-2 also may determine that the output port information indicates the terminal device 204 by de-capsulation.

Furthermore, the network device 230-2 transmits (470) a service response message 472 to the terminal device 204. As an example, the service response message 472 includes the service request Ack. For instance, the service response message 472 may indicate the target computing node (e.g., the computing node 240-3), for example, the service response message 472 may include an index or identifier of the target computing node. Correspondingly, the terminal device 204 receives (474) the service response message 472.

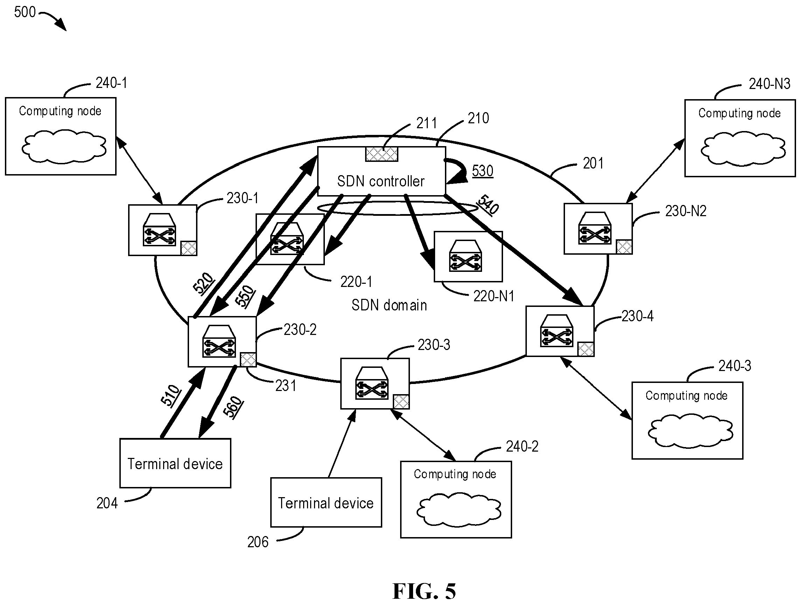

Fig. 5 illustrates a schematic flowchart of signaling 500 between the SDN controller and the network device in a network of computing and software defined network convergence in accordance with some example embodiments of the present disclosure. At 510, the terminal device 204 transmits a service request message to the network device 230-2. At 520, the network device 230-2 transmits a second message to the SDN controller 210. For example, the second message is a Packet-In message, and a reason field in the message is set to be "OFPR_SERVICE_REQUEST". At 530, the SDN controller 210 determines a target computing node and a path. For instance, the target computing node is the computing node 240-3 in Fig. 2, and the path includes a plurality of network devices: the network device 230-2, the network device 220-1, the network device 220-N1, and the network device 230-4. At 540, the SDN controller 210 separately transmits (or pushes) the forwarding rule to respective associated network devices in the path. At 550, the SDN controller 210 transmits a second response message to the network device 230-2. For instance, the second response message is a Packet-Out message, and may indicate a request acknowledgement. For example, the second response message may include an indication of the target computing node 240-3. At 560, the network device 230-2 transmits a request response message to the terminal device 204. For instance, the request response message may indicate the request acknowledgement and include an indication of the target computing node 240-3.

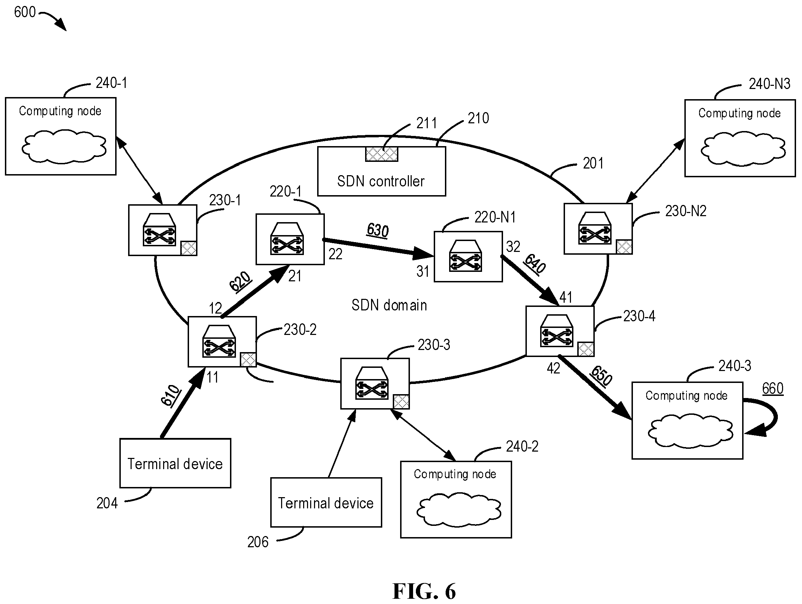

Accordingly, the SDN controller 210 can implement the service provisioning based on the service request. Furthermore, each network device can forward the packet in accordance with the forwarding rule issued by the SDN controller 210. Fig. 6 illustrates a schematic diagram of packet delivery 600 in accordance with some embodiments of the present disclosure. At 610, the terminal device 204 transmits a packet to the network device 230-2. It may be assumed that the network device 230-2 receives via the port 11 the packet from the terminal device 204. At 620, the network device 230-2 forwards the packet, e.g. via the port 12, according to the forwarding rule from the SDN controller 210. It may be presumed that the network device 220-1 receives the packets from the network device 230-2 via the port 21. At 630, the network device 220-1 forwards the packet, e.g. via the port 22, according to the forwarding rule from the SDN controller 210. It may be assumed that the network device 220-N1 receives the packets from the network device 220-1 via the port 31. At 640, the network device 220-N1 forwards the packet, e.g. via the port 32, according to the forwarding rule from the SDN controller 210. It may be assumed that the network device 230-4 receives the packets from the network device 220-N1 via the port 41. At 650, the network device 230-4 forwards the packet, e.g. via the port 42, to the computing node 240-3 according to the forwarding rule from the SDN controller 210. Furthermore, at 660, the subsequent data processing may be performed by the computing node 240-3.

According to embodiments of the present disclosure with reference to Figs. 2-6 above, there is proposed a computing control plane implemented in the SDN, comprising at least the CNC module 211 in the SDN controller 210 and the CNC proxy 231 in the edge network device 230. Accordingly, minor changes are needed for the SDN controller and the network device (e.g., software update alone) to respectively support the CNC module and the CNC proxy, so as to implement the CSDNC in embodiments of the present disclosure. The SDN controller can further manage and control the resources of the SDN domain in addition to the SDN network. The SDN controller can be used to orchestrate the service requests from the terminal device and is responsible for lifecycle management on the corresponding service modules in the computing nodes. Therefore, embodiments of the present disclosure can optimize the computing power resources of the SDN domain, boost the resource utilization rate of the SDN domain, and further enhance the processing efficiency of the packets.

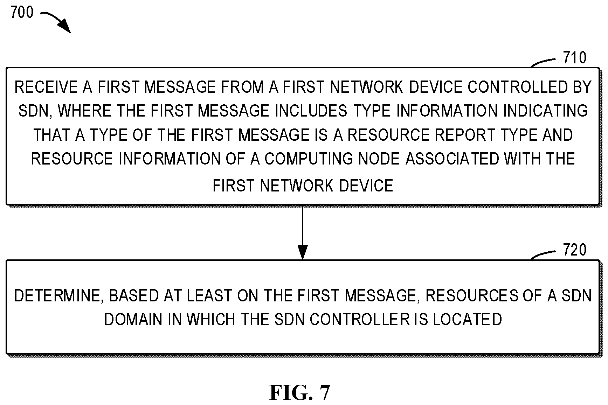

Fig. 7 illustrates a flowchart of an example method 700 implemented at the SDN controller in accordance with some example embodiments of the present disclosure. To facilitate the discussion, the method 700 is depicted with reference to the above SDN controller 210 in Fig. 2.

At block 710, the SDN controller 210 receives a first message from a first network device controlled by SDN, where the first message includes type information indicating that a type of the first message is a resource report type and resource information of a computing node associated with the first network device. At block 720, the SDN controller 210 determines, based at least on the first message, resources of a SDN domain in which the SDN controller is located.

In some embodiments, the SDN controller 210 records the resource information of respective computing nodes based on the first message. Alternatively, the SDN controller 210 may further record position information of respective computing nodes. In some embodiments, the SDN controller 210 may generate, based on the resource information corresponding to the respective computing nodes, the global resource information of the entire SDN domain.

In some embodiments, the SDN controller 210 further transmits a first response message to the first network device, where the first response message indicates an acknowledgement of the first message. For example, the first response message may include a resource information acknowledgement.

In some embodiments, the SDN controller 210 may further receive a second message from a second network device, where the second message includes type information indicating that a type of the second message is a service request type and service request information. The SDN controller 210 may further determine, based on the second message and the resources of the SDN domain, a target computing node and path information from the second network device to a third network device associated with the target computing node, where the path information indicates a plurality of network devices, and the plurality of network devices includes the second network device and the third network device. The SDN controller 210 further transmits, for respective network devices of the plurality of network devices, a forwarding rule of the respective network devices associated with the path information to corresponding respective network devices.

Alternatively, based on determining that the target computing node has not been deployed, the SDN controller 210 may further allocate required computing power resources on the target computing node and instantiate a required service module on the allocated computing power resources for processing required by the service request.

In some embodiments, the SDN controller 210 further transmits a second response message to the second network device, where the second response message indicates an acknowledgement of the second message. For example, the second response message includes a service request acknowledgement and an indication of the target computing node.

As an example, the resource information of the computing node includes at least one of the following: computing power information of the computing node, or service information of the computing node.

As an example, the first message and the second message are separately encapsulated into an OF Packet-In message. As an example, the first message and the second message separately carry the type information via a reason field. For instance, the first response message and the second response message are separately encapsulated into an OF Packet-Out message.

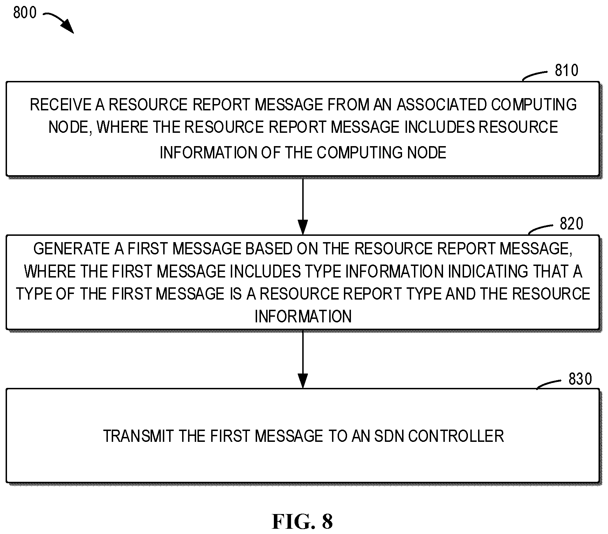

Fig. 8 illustrates a flowchart of an example method 800 implemented at the network device controlled by SDN in accordance with some example embodiments of the present disclosure. To facilitate the discussion, the method 800 is depicted with reference to the above edge network device 230 in Fig. 2.

At block 810, the network device 230 receives a resource report message from an associated computing node, where the resource report message includes resource information of the computing node. At block 820, the network device 230 generates a first message based on the resource report message, where the first message includes type information indicating that a type of the first message is a resource report type and the resource information. At block 830, the network device 230 transmits the first message to an SDN controller 210.

In some embodiments, the network device 230 further receives a first response message from the SDN controller 210, where the first response message indicates an acknowledgement of the first message.

In some embodiments, the network device 230 further receives a service request message from a terminal device, where the service request message includes service request information of the terminal device. The network device 230 further generates a second message based on the service request message, where the second message includes type information indicating that a type of the second message is a service request type and the service request information. The network device 230 further transmits the second message to the SDN controller 210. The network device 230 further receives a first forwarding rule from the SDN controller. For example, the network device 230 may be a network device connected with the terminal device. In some embodiments, the network device 230 further receives a second response message from the SDN controller 210, where the second response message indicates an acknowledgement of the second message.

In some further embodiments, the network device 230 further receives a second forwarding rule from the SDN controller. For example, the network device 230 may be a further network device in the path determined by the SDN controller, apart from the network devices connected with the terminal device. For instance, the network device 230 may be a network device connected to the target computing node determined by the SDN controller or a further intermediate network device.

Alternatively, the resource information of the computing node includes at least one of the following: computing power information of the computing node, or service information of the computing node.

As an example, the first message and the second message are encapsulated into an OF Packet-In message. As an example, the first message and the second message separately carry the type information via a reason field. For instance, the first response message and the second response message are separately encapsulated into an OF Packet-Out message.

It is to be understood that modes, situations and classes in the embodiments of the present disclosure and divisions of the embodiments are provided only to facilitate the description, instead of making particular restrictions. The various modes, classes, situations and features in the embodiments may be combined with one another as long as it makes sense.

It should be also appreciated that the above contents are described merely to help those skilled in the art obtain a better understanding of the embodiments of the present disclosure, rather than restricting the scope of the embodiments of the present disclosure. In view of the above contents, those skilled in the art may make various modifications, changes or combinations etc. The solution resulted from these modifications, changes or combinations is also within the scope of the embodiments of the present disclosure.

It is also to be understood that the above contents focus on differences among various embodiments, and the same or similar features may refer to each other and will not be repeated for conciseness.

In some example embodiments, an apparatus (e.g., SDN controller 210) capable of performing the method 700 may comprise means for performing the respective steps of the method 700. The means may be implemented in any suitable forms. For example, the means may be implemented in a circuitry or software module. The apparatus may be implemented as the SDN controller 210 or be included in the SDN controller 210. For instance, the apparatus may be implemented as a chip or a chip system in the SDN controller 210. In some embodiments, the means may comprise at least one processor and at least one memory including computer program codes. The at least one memory and the computer program codes are configured to, with the at least one processor, cause a performance of the apparatus.

In some embodiments, the apparatus comprises: means for receiving a first message from a first network device controlled by SDN, wherein the first message includes type information indicating that a type of the first message is a resource report type and resource information of a computing node associated with the first network device; and means for determining, based at least on the first message, resources of a SDN domain in which the SDN controller is located.

In some example embodiments, the apparatus further comprises: means for transmitting a first response message to the first network device, wherein the first response message indicates an acknowledgement of the first message.

In some example embodiments, the apparatus further comprises: means for receiving a second message from a second network device, wherein the second message includes type information indicating that a type of the second message is a service request type and service request information. The apparatus further comprises: means for determining, based on the second message and the resources of the SDN domain, a target computing node and path information from the second network device to a third network device associated with the target computing node, wherein the path information indicates a plurality of network devices and the plurality of network devices includes the second network device and the third network device. The apparatus further comprises: means for transmitting, for respective network devices of the plurality of network devices, a forwarding rule of the respective network devices associated with the path information to corresponding respective network devices.

In some example embodiments, the apparatus further comprises: means for based on determining that the target computing node has not been deployed, allocating required computing power resources on the target computing node and instantiating a required service module on the allocated computing power resources for processing required by the service request.

In some example embodiments, the apparatus further comprises: means for transmitting a second response message to the second network device, wherein the second response message indicates an acknowledgement of the second message.

In some example embodiments, the resource information of the computing node includes at least one of the following: computing power information of the computing node, or service information of the computing node.

In some example embodiments, the first message and the second message are separately encapsulated into an OF Packet-In message. In some example embodiments, the first message and the second message separately carry the type information via a reason field. In some example embodiments, the first response message and the second response message are separately encapsulated into an OF Packet-Out message.

In some example embodiments, an apparatus (e.g., network device 230) capable of performing the method 800 may comprise means for performing the respective steps of the method 800. The means may be implemented in any suitable forms. For example, the means may be implemented in a circuitry or software module. The apparatus may be implemented as the network device 230 or be included in the network device 230. For instance, the apparatus may be implemented as a chip or a chip system in the network device 230. In some embodiments, the means may comprise at least one processor and at least one memory including computer program codes. The at least one memory and the computer program codes are configured to, with the at least one processor, cause a performance of the apparatus.

In some example embodiments, the apparatus comprises: means for receiving a resource report message from an associated computing node, wherein the resource report message includes resource information of the computing node; means for generating a first message based on the resource report message, wherein the first message includes type information indicating that a type of the first message is a resource report type and the resource information; and means for transmitting the first message to the SDN controller.

In some example embodiments, the apparatus further comprises: means for receiving a first response message from the SDN controller, wherein the first response message indicates an acknowledgement of the first message.

In some example embodiments, the apparatus further comprises: means for receiving a service request message from a terminal device, wherein the service request message includes service request information of the terminal device. The apparatus further comprises: means for generating a second message based on the service request message, wherein the second message includes type information indicating that a type of the second message is a service request type and the service request information. The apparatus further comprises: means for transmitting the second message to the SDN controller. The apparatus further comprises: means for receiving a first forwarding rule from the SDN controller.

In some example embodiments, the apparatus further comprises: means for receiving a second response message from the SDN controller, wherein the second response message indicates an acknowledgement of the second message.

In some example embodiments, the apparatus further comprises: means for receiving a second forwarding rule from the SDN controller.

In some example embodiments, the resource information of the computing node includes at least one of the following: computing power information of the computing node, or service information of the computing node.

In some example embodiments, the first message and the second message are separately encapsulated into an OF Packet-In message. In some example embodiments, the first message and the second message separately carry the type information via a reason field. In some example embodiments, the first response message and the second response message are separately encapsulated into an OF Packet-Out message.

Generally speaking, various embodiments of the present disclosure may be implemented in hardware, dedicated circuits, software, logic or any combinations thereof. Some aspects may be implemented in hardware while others may be implemented in firmware or software executed by controllers, microprocessors or other computing devices. Although each aspect of embodiments of the present disclosure is illustrated or described as block diagram or flowchart or represented by some other figures, it should be understood that the block, apparatus, system, technology or method described here may be implemented in hardware, software, firmware, dedicated circuits, logic, general-purpose hardware, controller, or other computing devices, or any other combinations thereof as non-restrictive examples.

The present disclosure also provides at least one computer program product tangibly stored on the non-transitory computer-readable storage medium. The computer program product includes computer-executable instructions executed in devices on a target physical or virtual processor, e.g., instructions included in the program modules, to perform the above methods 700 and 800 with reference to Figs. 7 and 8. In general, program modules comprise routines, programs, libraries, objects, classes, components, data architecture etc. and execute particular tasks or implement particular abstract data structure. In each embodiment, functions of the program modules may be merged or divided between the described program modules as needed and the machine-executable instructions for program modules may be executed in local or distributed devices. In the distributed devices, program modules may be positioned either in local or remote storage media.

The program codes for implementing method of the present disclosure may be written in one of more kinds of programming languages. The program codes may be provided to processors or controllers of the general-purpose computer, dedicated computer or other programmable data processing apparatuses, such that the program codes, when executed by the processor or the controller, cause the implementation of functions/operations specified in the flowchart and/or block diagram. The program codes can be executed entirely on the machine, partially on the machine, as an independent software package, partially on the machine and partially on the remote machine or entirely on the remote machine or server.

In the context of the present disclosure, the computer program codes or related data may be carried by suitable carriers, such that the device, apparatus or processor can perform the above described various procedures and operations. Examples of the carrier include signal, computer-readable medium and the like.

The computer-executable medium may be a computer-readable signal medium or a computer-readable storage medium. The computer-readable medium may include, but not limited to, electronic, magnetic, optical, electromagnetic, infrared semiconductor system, apparatus or device, or any suitable combinations thereof. The more specific examples of the computer-readable storage medium comprise an electrical connection including one or more wires, a portable computer disk, a hard disk, a random-access memory (RAM), a read-only memory (ROM), an erasable programmable read-only memory (EPROM or flash), an optic fiber, a portable compact disk read-only memory (CD-ROM), an optical storage device, a magnetic storage device, or any suitable combinations thereof.

Furthermore, although the operations are depicted in a particular order, it should be appreciated that the operations are not required to be completed in the particular order or in succession, or not all operations shown in the drawings need to be executed to obtain the expected result. In some cases, multitasking or multiprocessing is also beneficial. Likewise, although the above description comprises some particular implementation details, they should not be interpreted as limiting the scope of the present disclosure. On the contrary, they should be appreciated as description for features specific to particular embodiments. Some features described separately in the context of the embodiments of the description can also be integrated and implemented in a single embodiment. Conversely, all kinds of features described in the context of a single embodiment can also be separately implemented in multiple embodiments or in any suitable sub-combinations.

Although the subject matter has been described in languages specific to structural features and/or method actions, it should be understood that the subject matter defined in the attached claims is not limited to the above described particular features or actions. On the contrary, the above described specific features and actions are disclosed for implementing examples of the claims.

## Claims

1. A software defined network, SDN, controller (210), comprising:
at least one processor; and
at least one memory storing computer instructions, the instructions, when executed by the at least one processor, causing the SDN controller (210) to:
receive (710) a first message (332) from a first network device (230) controlled by SDN, wherein the first message (332) includes type information indicating that a type of the first message (332) is a resource report type and resource information of a computing node associated with the first network device (230); and
determine (720), based at least on the first message (332), resources of a SDN domain in which the SDN controller (210) is located.

2. The SDN controller (210) of claim 1, wherein the instructions, when executed by the at least one processor, further cause the SDN controller (210) to:
transmit a first response message to the first network device, wherein the first response message indicates an acknowledgement of the first message.

3. The SDN controller (210) of claim 1, wherein the instructions, when executed by the at least one processor, further cause the SDN controller (210) to:
receive a second message from a second network device, wherein the second message includes type information indicating that a type of the second message is a service request type and service request information;
determine, based on the second message and the resources of the SDN domain, a target computing node and path information from the second network device to a third network device associated with the target computing node, wherein the path information indicates a plurality of network devices and the plurality of network devices includes the second network device and the third network device; and
transmit, for respective network devices of the plurality of network devices, a forwarding rule of the respective network devices associated with the path information to corresponding respective network devices.

4. The SDN controller (210) of claim 3, wherein a) the instructions, when executed by the at least one processor, further cause the SDN controller (210) to:
based on determining that the target computing node has not been deployed, allocate required computing power resources on the target computing node and instantiate a required service module on the allocated computing power resources for processing required by the service request, and/or wherein b) the instructions, when executed by the at least one processor, further cause the SDN controller to:
transmit a second response message to the second network device, wherein the second response message indicates an acknowledgement of the second message.

5. The SDN controller (210) of claim 1, wherein resource information of the computing node includes at least one of the following:
computing power information of the computing node, or
service information of the computing node.

6. The SDN controller of claim 1 or 3, wherein a) the first message and the second message are separately encapsulated into an OpenFlow, OF, Packet-In message, and/or,
wherein b) the first message and the second message separately carry the type information via a reason field.

7. The SDN controller (210) of claim 2 or 5, wherein the first response message and the second response message are separately encapsulated into an OF Packet-Out message.

8. A network device (230) controlled by a software defined network, SDN, comprising:
at least one processor; and
at least one memory storing computer instructions, the instructions, when executed by the at least one processor, causing the network device (230) to:
receive (810) a resource report message (312) from an associated computing node (240), wherein the resource report message (312) includes resource information of the computing node;
generate (820) a first message (332) based on the resource report message (312), wherein the first message (332) includes type information indicating that a type of the first message is a resource report type and the resource information; and
transmit (830) the first message (332) to an SDN controller (210).

9. The network device (230) of claim 8, wherein the instructions, when executed by the at least one processor, further cause the network device (230) to:
receive a first response message (352) from the SDN controller (210), wherein the first response message (352) indicates an acknowledgement of the first message (332).

10. The network device (230) of claim 8, wherein the instructions, when executed by the at least one processor, further cause the network device (230) to:
receive (414) a service request message from a terminal device, wherein the service request message includes service request information of the terminal device;
generate (420) a second message based on the service request message, wherein the second message includes type information indicating that a type of the second message is a service request type and the service request information;
transmit (430) the second message to the SDN controller (210); and
receive a first forwarding rule from the SDN controller (210),
wherein for example the instructions, when executed by the at least one processor, further cause the network device (230) to:
receive a second response message from the SDN controller, wherein the second response message indicates an acknowledgement of the second message.

11. The network device (230) of claim 8, wherein the instructions, when executed by the at least one processor, further cause the network device to:
receive a second forwarding rule from the SDN controller.

12. The network device (230) of claim 8, wherein resource information of the computing node includes at least one of the following:
computing power information of the computing node, or
service information of the computing node.

13. The network device of claim 8 or 10, wherein a) the first message and the second message are separately encapsulated into an OpenFlow, OF, Packet-In message,
and/or wherein b) the first message and the second message separately carry the type information via a reason field.

14. The network device of claim 9 or 11, wherein the first response message and the second response message are separately encapsulated into an OF Packet-Out message.

15. A method, comprising:
receiving (710) a first message from a first network device controlled by a software defined network, SDN, wherein the first message includes type information indicating that a type of the first message is a resource report type and resource information of a computing node associated with the first network device; and
determining (720), based at least on the first message, resources of a SDN domain in which an SDN controller is located.

16. A method, comprising:
receiving (810) a resource report message from an associated computing node, wherein the resource report message includes resource information of the computing node;
generating (820) a first message based on the resource report message, wherein the first message includes type information indicating that a type of the first message is a resource report type and the resource information; and
transmitting (830) the first message to a software defined network, SDN, controller.

17. An apparatus, comprising:
means for receiving (710) a first message from a first network device controlled by a software defined network, SDN, wherein the first message includes type information indicating that a type of the first message is a resource report type and resource information of a computing node associated with the first network device; and
means for determining (720), based at least on the first message, resources of a SDN domain in which an SDN controller is located.

18. An apparatus, comprising:
means for receiving (810) a resource report message from an associated computing node, wherein the resource report message includes resource information of the computing node;
means for generating (820) a first message based on the resource report message, wherein the first message includes type information indicating that a type of the first message is a resource report type and the resource information; and
means for transmitting (830) the first message to a software defined network, SDN, controller.

19. A computer-readable storage medium storing computer program instructions thereon, wherein the program instructions are provided for causing an apparatus to perform the method of claim 15 or 16.
